# EUROPEAN PATENT APPLICATION

(11) **EP 3 467 914 A1**
(43) Date of publication of application: **10.04.2019**
(21) Application number: 17810118.4
(22) Date of filing: 25.05.2017
(51) Int. Cl.: H01M 4/52, C01G 53/00

(54) **POSITIVE ELECTRODE MATERIAL FOR RECHARGEABLE BATTERY**

(30) Priority: 07.06.2016 JP 2016113893
(71) Applicant: Tanaka Chemical Corporation, Fukui-shi Fukui 910-3131 (JP)
(72) Inventor: HANAMURA Naoya, Fukui-shi Fukui 910-3131 (JP); YASUDA Taiki, Fukui-shi Fukui 910-3131 (JP); HATA Mikio, Fukui-shi Fukui 910-3131 (JP)
(74) Representative: Weickmann & Weickmann PartmbB
(86) International application number: PCT/JP2017/019554
(87) International publication number: WO 2017/212938

(57) **Abstract**

It is an object of the present invention to provide a particulate positive electrode active material which has a uniform crystallinity regardless of the size of a secondary particle diameter to improve the utilization rate and cyclability of a rechargeable battery, and has a high density to allow the rechargeable battery to have a high capacity with respect to volume.

The particulate positive electrode active material comprises positive electrode active material particles formed by aggregation of a plurality of primary particles, wherein a ratio of a value obtained by deducting a half width of a diffraction peak of a (101) plane obtained by X-ray diffraction analysis of positive electrode active material particles having a secondary particle diameter at a cumulative volume percentage of 2.5% by volume (D2.5), from a half width of a diffraction peak of a (101) plane obtained by X-ray diffraction analysis of positive electrode active material particles having a secondary particle diameter at a cumulative volume percentage of 99% by volume (D99), in the particulate positive electrode active material, to a half width of a diffraction peak of a (101) plane obtained by X-ray diffraction analysis of the particulate positive electrode active material is 0 or more and 0.025 or less, and a ratio of a value obtained by deducting a half width of a diffraction peak of a (001) plane obtained by X-ray diffraction analysis of positive electrode active material particles having a secondary particle diameter at a cumulative volume percentage of 2.5% by volume (D2.5), from a half width of a diffraction peak of a (001) plane obtained by X-ray diffraction analysis of positive electrode active material particles having a secondary particle diameter at a cumulative volume percentage of 99% by volume (D99), in the particulate positive electrode active material, to a half width of a diffraction peak of a (001) plane obtained by X-ray diffraction analysis of the particulate positive electrode active material is 0 or more and 0.045 or less.

## Description

### Technical Field

The present invention relates to a particulate positive electrode active material used for a positive electrode plate of a rechargeable battery, and particularly relates to a particulate positive electrode active material having a uniform crystallinity regardless of the size of a secondary particle diameter.

### Background Art

In recent years, a rechargeable battery used as a power supply for a mobile phone, an automobile, or the like is increasingly required to have a high utilization rate, a high capacity with respect to volume, and the like. From the above requirement, it is known that even among the same positive electrode active material, one having a low crystallinity is known to tend to have a higher degree of freedom of proton movement, and so attempts have been made to lower the crystallinity of the positive electrode active material to improve the utilization rate and cyclability of the rechargeable battery.

Then, the use of a nickel electrode which has a low crystallinity has been proposed, wherein the half width of the peak of a (101) plane in X-ray diffraction in a positive electrode active material mainly containing nickel hydroxide is 0.8°/2θ or more, and which contains metal cobalt or cobalt oxide forming no eutectic with nickel hydroxide to improve the utilization rate and cyclability (Patent Literature 1).

The use of a nickel hydroxide positive electrode active material containing 2 to 7% by mass of cadmium has been proposed, wherein the cadmium is in a solid solution state in a nickel hydroxide crystal, to cause distortion to occur in a nickel hydroxide crystal, thereby improving the degree of freedom of the movement of a proton to improve a utilization rate (Patent Literature 2).

However, it was found that the positive electrode active materials produced as shown in Patent Literatures 1 and 2 tend to have different crystallinities caused by the difference between secondary particle diameters. That is, the positive electrode active material having a large secondary particle diameter tends to have a high crystallinity, and the positive electrode active material having a small secondary particle diameter tends to have a low crystallinity. Accordingly, it was found that the contained particles having a high crystallinity cause a problem that improvements in a utilization rate and cyclability are still insufficient as the whole obtained positive electrode active material.

A method involving classifying particles having a high crystallinity to remove the particles is considered as a method solving such a problem. However, the method requires a classifying step, which deteriorates the productivity. Furthermore, the use of only the positive electrode active material having a small secondary particle diameter cannot provide high-density filling, which causes a problem that a high capacity with respect to volume cannot be achieved.

### Document List

### Patent Literatures

Patent Literature 1: Japanese Patent Application Publication No. 4-328257
Patent Literature 2: Japanese Patent Application Publication No. 1-260762

### Summary of Invention

### Technical Problem

In view of the above circumstances, it is an object of the present invention to provide a particulate positive electrode active material which has a uniform crystallinity regardless of the size of a secondary particle diameter to improve the utilization rate and cyclability of a rechargeable battery, and has a high density to allow the rechargeable battery to have a high capacity with respect to volume.

### Solution to Problem

An aspect of the present invention is a particulate positive electrode active material comprising positive electrode active material particles formed by aggregation of a plurality of primary particles, wherein a ratio of a value obtained by deducting a half width (Lc) of a diffraction peak of a (101) plane obtained by X-ray diffraction analysis of positive electrode active material particles having a secondary particle diameter at a cumulative volume percentage of 2.5% by volume (D2.5), from a half width (La) of a diffraction peak of a (101) plane obtained by X-ray diffraction analysis of positive electrode active material particles having a secondary particle diameter at a cumulative volume percentage of 99% by volume (D99), in the particulate positive electrode active material, to a half width (Li) of a diffraction peak of a (101) plane obtained by X-ray diffraction analysis of the particulate positive electrode active material is 0 or more and 0.025 or less, and a ratio of a value obtained by deducting a half width (Lc) of a diffraction peak of a (001) plane obtained by X-ray diffraction analysis of positive electrode active material particles having a secondary particle diameter at a cumulative volume percentage of 2.5% by volume (D2.5), from a half width (La) of a diffraction peak of a (001) plane obtained by X-ray diffraction analysis of positive electrode active material particles having a secondary particle diameter at a cumulative volume percentage of 99% by volume (D99), in the particulate positive electrode active material, to a half width (Li) of a diffraction peak of a (001) plane obtained by X-ray diffraction analysis of the particulate positive electrode active material is 0 or more and 0.045 or less.

In the aspect, the particulate positive electrode active material is obtained by a predetermined manufacturing method, and is in an unclassified state. The positive electrode active material has only one peak of a particle size distribution for secondary particles. The positive electrode active material particles as the component of the particulate positive electrode active material are in a massive form formed by aggregation of the plurality of primary particles. In the aspect, a value (La-Lc)/Li for the diffraction peak of the (101) plane obtained by X-ray diffraction analysis is 0 or more and 0.025 or less, and a value (La-Lc)/Li for the diffraction peak of the (001) plane obtained by X-ray diffraction analysis is 0 or more and 0.045 or less.

The half width of the diffraction peak of the (101) plane obtained by X-ray diffraction analysis and the half width of the diffraction peak of the (001) plane obtained by X-ray diffraction analysis are indexes highly correlated with a crystallinity. The peak of the (101) plane in X-ray diffraction analysis using CuKα rays is 2θ = 38.5 ± 1°, and the peak of the (001) plane in X-ray diffraction analysis using CuKα rays is 2θ = 19.0 ± 1°.

An aspect of the present invention is the particulate positive electrode active material, wherein the secondary particle diameter at a cumulative volume percentage of 99% by volume (D99) is 15 µm to 25 µm, the secondary particle diameter at a cumulative volume percentage of 2.5% by volume (D2.5) is 1.0 µm to 5.0 µm, and a secondary particle diameter at a cumulative volume percentage of 50% by volume (D50) is 8.0 µm to 13.5 µm.

An aspect of the present invention is the particulate positive electrode active material, wherein the half width of a diffraction peak of a (101) plane obtained by X-ray diffraction analysis is 1.050° or more, and the half width of a diffraction peak of a (001) plane obtained by X-ray diffraction analysis is 0.750° or more.

An aspect of the present invention is the particulate positive electrode active material, wherein a proportion of the positive electrode active material particles having a particle roundness of less than 0.85 is 1.20% by volume or less.

An aspect of the present invention is the particulate positive electrode active material, wherein the particulate positive electrode active material has a bulk density of 1.75 g/ml or more.

In the aspect, bulk density (BD)/tapping density (TD) is 0.78 to 0.90.

An aspect of the present invention is the particulate positive electrode active material, wherein the particulate positive electrode active material has a BET specific surface area of 10.0 to 17.0 m²/g.

An aspect of the present invention is a positive electrode plate comprising the particulate positive electrode active material.

An aspect of the present invention is a rechargeable battery comprising the positive electrode plate.

### Effects of Invention

According to the aspect of the present invention, the value (La-Lc)/Li for the diffraction peak of the (101) plane obtained by X-ray diffraction analysis is 0 or more and 0.025 or less, and the value (La-Lc)/Li for the diffraction peak of the (001) plane obtained by X-ray diffraction analysis is 0 or more and 0.045 or less. The positive electrode active material particles having the ranges of D2.5 and D99, that is, the particulate positive electrode active material has a wholly uniform crystallinity, whereby the utilization rate and cyclability of the rechargeable battery can be improved. The value (La-Lc)/Li is 0 or more, that is, the half width of the positive electrode active material having D99 is equal to or greater than the half width of the positive electrode active material having D2.5, and the crystallinity of the positive electrode active material having a large particle diameter is the same as, or lower than the crystallinity of the positive electrode active material having a small particle diameter, whereby the utilization rate of the rechargeable battery can be improved.

According to the aspect of the present invention, the particulate positive electrode active material has a wholly uniform crystallinity, whereby the positive electrode active material having a small secondary particle diameter tending to have a low crystallinity may not be used in a state where it is classified and selected. As a result, a high filling density is obtained, which allows the rechargeable battery to have a high capacity with respect to volume.

According to the aspect of the present invention, the particulate positive electrode active material has D99 of 15 µm to 25 µm, D2.5 of 1.0 µm to 5.0 µm, and D50 of 8.0 µm to 13.5 µm, whereby a higher filling density is obtained, which allows the rechargeable battery to have a higher capacity with respect to volume.

According to the aspect of the present invention, the half width of the diffraction peak of the (101) plane of the particulate positive electrode active material is 1.050° or more, and the half width of the diffraction peak of the (001) plane is 0.750° or more, whereby the particulate positive electrode active material has a sufficiently low uniform crystallinity, which can provide further improved utilization rate and cyclability of the rechargeable battery.

### Brief Description of Drawing

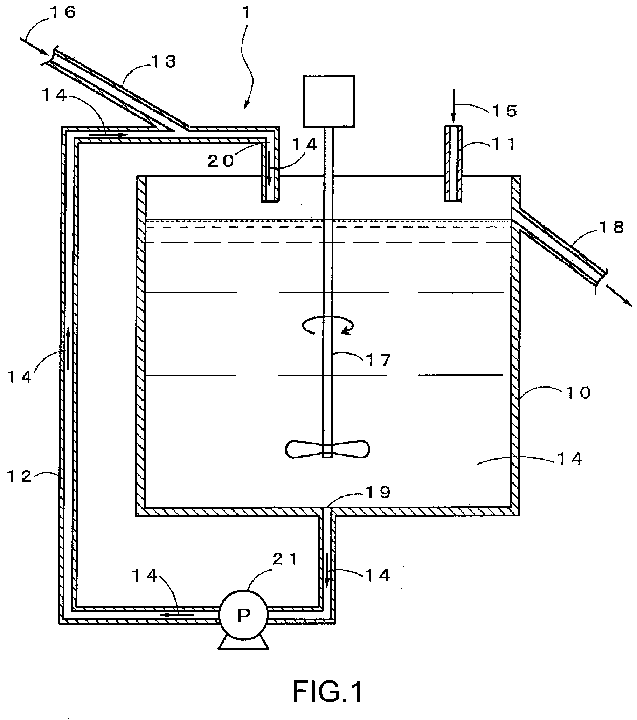

[FIG. 1] A side view illustrating a manufacturing device of a particulate positive electrode active material of the present invention.

### Description of Embodiments

Hereinafter, a particulate positive electrode active material of the present invention will be described in detail.

The particulate positive electrode active material of the present invention is a positive electrode active material which is not classified. The secondary particle diameter of the particulate positive electrode active material has a particle size distribution with one peak.

The particle size distribution of secondary particles is not particularly limited, and a secondary particle diameter at a cumulative volume percentage of 99% by volume (hereinafter, may be referred to as "D99") is, for example, 15 µm to 25 µm, and preferably 17 µm to 23 µm, and particularly preferably 18 µm to 21 µm from the viewpoint of more excellent high-density filling. A secondary particle diameter at a cumulative volume percentage of 2.5% by volume (hereinafter, may be referred to as "D2.5") is, for example, 1.0 µm to 5.0 µm, and preferably 2.0 µm to 4.5 µm, and particularly preferably 3.0 µm to 4.0 µm from the viewpoint of more excellent high-density filling. A secondary particle diameter at a cumulative volume percentage of 50% by volume (hereinafter, may be referred to as "D50") is, for example, 8.0 µm to 13.5 µm, and preferably 9.0 µm to 12.0 µm, and particularly preferably 9.5 µm to 11.0 µm from the viewpoint of more excellent high-density filling.

In the particulate positive electrode active material of the present invention, a ratio of a value (La-Lc) obtained by deducting a half width (Lc) of a diffraction peak of a (101) plane obtained by X-ray diffraction analysis of positive electrode active material particles having D2.5, from a half width (La) of a diffraction peak of a (101) plane obtained by X-ray diffraction analysis of positive electrode active material particles having D99, in the particulate positive electrode active material, to a half width (Li) of a diffraction peak of a (101) plane obtained by X-ray diffraction analysis of the particulate positive electrode active material is 0 or more and 0.025 or less, and a ratio of a value (La-Lc) obtained by deducting a half width (Lc) of a diffraction peak of a (001) plane obtained by X-ray diffraction analysis of positive electrode active material particles having D2.5, from a half width (La) of a diffraction peak of a (001) plane obtained by X-ray diffraction analysis of positive electrode active material particles having D99, in the particulate positive electrode active material, to a half width (Li) of a diffraction peak of a (001) plane obtained by X-ray diffraction analysis of the particulate positive electrode active material is 0 or more and 0.045 or less. That is, the value (La-Lc)/Li (hereinafter, may be referred to as "relative error of (101) plane") for the diffraction peak of the (101) plane obtained by X-ray diffraction analysis is 0 or more and 0.025 or less. The value (La-Lc)/Li (hereinafter, may be referred to as "relative error of (001) plane") for the diffraction peak of the (001) plane obtained by X-ray diffraction analysis is 0 or more and 0.045 or less.

As described above, in the particulate positive electrode active material of the present invention, in even the half widths measured in D99, D2.5, and the secondary particle diameter located near both of the ends of the particle size distribution, the relative error of the (101) plane is reduced to 0 or more and 0.025 or less, and the relative error of the (001) plane is reduced to 0 or more and 0.045 or less, whereby the difference in crystallinity between the positive electrode active materials according to the size of the secondary particle diameter is reduced. That is, the particulate positive electrode active material of the present invention has a wholly uniform crystallinity. Each of the relative error of the (101) plane and the relative error of the (001) plane is 0 or more, and the positive electrode active material having D99, that is, the half width of the positive electrode active material having a relatively large secondary particle diameter is equal to or greater than the half width of the positive electrode active material having D2.5, that is, the positive electrode active material having a relatively small secondary particle diameter. The crystallinity of the positive electrode active material having a large particle diameter is the same as, or lower than the crystallinity of the positive electrode active material having a small particle diameter.

The relative error of the (101) plane is not particularly limited as long as it is 0 or more and 0.025 or less, but the relative error of the (101) plane is particularly preferably 0 or more and 0.024 or less from the viewpoint of obtaining a more uniform crystallinity in the whole particulate positive electrode active material. The relative error of the (001) plane is not particularly limited as long as it is 0 or more and 0.045 or less, but the relative error of the (001) plane is particularly preferably 0 or more and 0.041 or less from the viewpoint of obtaining a more uniform crystallinity in the whole particulate positive electrode active material.

As described above, the particulate positive electrode active material of the present invention has a wholly uniform crystallinity, and the crystallinity of the positive electrode active material having a large particle diameter is the same as, or lower than the crystallinity of the positive electrode active material having a small particle diameter, whereby the utilization rate and cyclability of the rechargeable battery can be improved. Furthermore, the particulate positive electrode active material has a wholly uniform crystallinity, whereby the positive electrode active material having a small secondary particle diameter tending to have a low crystallinity need not be used in a state where it is classified and selected, which can achieve a high filling density.

In the particulate positive electrode active material of the present invention, the half width (Li) of the diffraction peak of the (101) plane obtained by X-ray diffraction analysis is preferably 1.050° or more, and particularly preferably 1.060° or more from the viewpoint of lowering the crystallinity to improve the utilization rate and the cyclability. In the particulate positive electrode active material of the present invention, the half width (Li) of the diffraction peak of the (001) plane obtained by X-ray diffraction analysis is preferably 0.750° or more, and particularly preferably 0.760° or more from the viewpoint of lowering the crystallinity to improve the utilization rate and the cyclability.

The half width (La) of the diffraction peak of the (101) plane obtained by X-ray diffraction analysis of the positive electrode active material particles having D99 is preferably 1.070° or more, and particularly preferably 1.080° or more from the viewpoint of lowering the crystallinity to improve the utilization rate and the cyclability. The half width (Lc) of the diffraction peak of the (101) plane obtained by X-ray diffraction analysis of the positive electrode active material particles having D2.5 is preferably 1.050° or more, and particularly preferably 1.060° or more from the viewpoint of lowering the crystallinity to improve the utilization rate and the cyclability.

The half width (La) of the diffraction peak of the (001) plane obtained by X-ray diffraction analysis of the positive electrode active material particles having D99 is preferably 0.740° or more, and particularly preferably 0.750° or more from the viewpoint of lowering the crystallinity to improve the utilization rate and the cyclability. The half width (Lc) of the diffraction peak of the (001) plane obtained by X-ray diffraction analysis of the positive electrode active material particles having D2.5 is preferably 0.710° or more, and particularly preferably 0.720° or more from the viewpoint of lowering the crystallinity to improve the utilization rate and the cyclability.

A particle roundness is an index of sphericity when a particle is two-dimensionally projected. Particles to be measured are shot one by one with a CCD camera or the like, and the particle roundness is calculated from the circumference length of a circle having the same area as that of the image of the particle/the circumference length of the image of the particle. Examples of a device used for the measurement include a wet flow type particle size-shape analyzer "FPIA-3000S" (manufactured by Sysmex Corporation).

In the particulate positive electrode active material of the present invention, the proportion of the positive electrode active material having a particle roundness of less than 0.85 is not particularly limited, but it is preferably 1.20% by volume or less, and particularly preferably 1.15% by volume or less from the viewpoint of obtaining a high density.

In the particulate positive electrode active material of the present invention, a bulk density (BD) is not particularly limited. For example, the bulk density is preferably 1.75 g/ml or more, and particularly preferably 1.80 g/ml or more from the viewpoint of improving a filling degree upon use as the positive electrode active material.

In the particulate positive electrode active material of the present invention, a tap density (TD) is not particularly limited. For example, the tap density is preferably 2.20 g/ml or more, and particularly preferably 2.25 g/ml or more from the viewpoint of improving a filling degree upon use as the positive electrode active material.

In the particulate positive electrode active material of the present invention, a value of bulk density (BD)/tap density (TD) is not particularly limited, but the value is preferably 0.78 to 0.90, and particularly preferably 0.80 to 0.90 from the viewpoint of allowing the particulate positive electrode active material to be filled in a high density state when the rechargeable battery is produced.

The BET specific surface area of the particulate positive electrode active material of the present invention is not particularly limited. For example, the BET specific surface area is preferably 10.0 to 17.0 m²/g, and particularly preferably 13.0 to 16.0 m²/g.

The composition of the particulate positive electrode active material of the present invention and the kind of the rechargeable battery are not particularly limited as long as the composition of the particulate positive electrode active material can be used as the positive electrode active material of the rechargeable battery. Examples of the positive electrode active material of an alkaline rechargeable battery such as a nickel hydrogen rechargeable battery include transition metal hydroxides such as a Ni/Co/Zn composite hydroxide, a Ni/Co/Mg composite hydroxide, and a Ni/Al composite hydroxide. Examples of the positive electrode active material of a lithium-ion rechargeable battery include transition metal hydroxides such as a Ni/Co/Mn composite hydroxide and a Ni/Co/Mn/Al composite hydroxide.

Thereafter, an example of a method for manufacturing a particulate positive electrode active material of the present invention will be described. The particulate positive electrode active material of the present invention can be manufactured by using a manufacturing device 1 shown in FIG. 1, for example.

The manufacturing device 1 includes a pH adjusting tank 10 for adjusting the pH of a mother liquid 14 which is stored, a pH adjuster feeding means 11 for feeding a pH adjuster 15 to the pH adjusting tank 10, a circulating path 12 for continuously extracting a part of a mother liquid 14 having the adjusted pH from the pH adjusting tank 10, and continuously returning the extracted mother liquid 14 to the pH adjusting tank 10, and a raw material liquid feeding means 13 for feeding a raw material liquid 16 to the mother liquid 14 circulating in the circulating path 12.

The pH adjuster feeding means 11 is a tubular body including one end part communicated with the pH adjusting tank 10 and another end part communicated with a pH adjuster storing tank (not shown) storing the pH adjuster 15. In the pH adjusting tank 10, a stirrer 17 is provided. The stirrer 17 mixes the raw material liquid 16 contained in the mother liquid 14 stored in the pH adjusting tank 10 with the pH adjuster 15 fed from the pH adjuster feeding means 11, to uniformize the whole OH concentration of the mother liquid 14 stored in the pH adjusting tank 10. Therefore, the reaction of the raw material liquid 16 in the mother liquid 14 is stable.

The particulate positive electrode active material as the reaction product which has been produced and grown is obtained from the pH adjusting tank 10 storing the mother liquid 14 having the uniformized OH concentration and containing an ingredient derived from the raw material liquid 16. An overflow pipe 18 communicated with the pH adjusting tank 10 is provided in the top part of the pH adjusting tank 10. The particulate positive electrode active material which has been produced and grown is taken out to the outside from the pH adjusting tank 10 via the overflow pipe 18.

A mother liquid extracting port 19 and a mother liquid returning port 20 are provided in the pH adjusting tank 10. A part of the mother liquid 14 of the pH adjusting tank 10 is continuously extracted from the mother liquid extracting port 19, and the extracted mother liquid 14 is fed to the circulating path 12. The mother liquid 14 fed to the circulating path 12 circulates in the direction of the mother liquid returning port 20 from the mother liquid extracting port 19 in the circulating path 12. The mother liquid 14 circulating in the direction of the mother liquid returning port 20 from the mother liquid extracting port 19 is returned into the pH adjusting tank 10 from the mother liquid returning port 20. The flow of the mother liquid 14 in the circulating path 12 is achieved by a circulating pump 21 provided in the circulating path 12.

The raw material liquid feeding means 13 for feeding the raw material liquid 16 to the mother liquid 14 circulating in the circulating path 12 is provided in the circulating path 12. The raw material liquid feeding means 13 is a tubular body having one end part communicated with the circulating path 12 and another end part communicated with a raw material liquid storing tank (not shown) storing the raw material liquid 16.

As shown in FIG. 1, in the manufacturing device 1, the raw material liquid 16 is fed to the mother liquid 14 from a direction parallel to the flow direction of the mother liquid 14 circulating in the circulating path 12. That is, in a region in which one end part of the raw material liquid feeding means 13 is communicated with the circulating path 12, the flow direction of the raw material liquid 16 circulating in the raw material liquid feeding means 13 and the flow direction of the mother liquid 14 circulating in the circulating path 12 are parallel to each other in plan view. In the manufacturing device 1, in a region in which the raw material liquid feeding means 13 and the circulating path 12 are communicated with each other, the raw material liquid feeding means 13 is provided in the direction of an acute angle (the direction of about 45° in FIG. 1) in side view with respect to the circulating path 12.

The raw material liquid 16 is smoothly fed to the mother liquid 14 flowing in the circulating path 12 from the raw material liquid feeding means 13 by the positional relationship between the raw material liquid feeding means 13 and the circulating path 12, whereby the dispersibility of the raw material liquid 16 in the mother liquid 14 is improved in the circulating path 12, and furthermore, as described above, the reaction of the raw material liquid 16 in the mother liquid 14 is stable. Therefore, in the manufacturing device 1, the particulate positive electrode active material as the reaction product is uniformly produced and grown. As a result, the particulate positive electrode active material can be obtained, which has a uniform crystallinity regardless of the size of the secondary particle diameter, has a high bulk density and a high tapping density, and is spheroidized.

### Examples

Thereafter, Examples of the present invention will be described below, but the present invention is not limited to these examples within a range not to exceed the scope of the present invention.

In Example 1, a particulate positive electrode active material was manufactured under conditions shown in the following Table 1 by using the manufacturing device including a circulating path for a mother liquid. In Comparative Example 1, by using an overflow type manufacturing device in which neither a mother liquid nor a raw material liquid did not circulate in place of the manufacturing device including the circulating path for the mother liquid (a manufacturing device for directly feeding a raw material liquid, a pH adjuster, and a complexing agent from the top plate of a pH adjusting tank to the mother liquid in the pH adjusting tank), the particulate positive electrode active material was manufactured under the conditions shown in the following Table 1.

Sodium hydroxide of 32% by mass was used as the pH adjuster. Together with the pH adjuster, 100 g/L of ammonium sulfate as the complexing agent was added, to keep an ammonium ion concentration in the mother liquid of the pH adjusting tank at 12 g/L. As the raw material liquid, an aqueous solution was prepared, which contained nickel sulfate, cobalt sulfate, and zinc sulfate (molar ratio of nickel : cobalt : zinc = 90 : 2 : 8). A nickel/cobalt/zinc composite hydroxide was manufactured as the particulate positive electrode active material.

**[Table 1]**

| | | Example 1 | Comparative Example 1 |
|---|---|---|---|
| Raw material liquid addition position | | Circulating path | Top plate of pH adjusting tank |
| Raw material liquid flow rate | ml/min | 20,00 | 20,00 |
| Circulating flow rate | L/min | 40 | - |
| Circulating flow rate/raw material liquid flow rate | | 2000 | - |
| Volume of pH adjusting tank | L | 50 | 50 |
| Temperature of mother liquid of pH adjusting tank | °C | 45,0 | 45,0 |
| Average secondary particle diameter (D99) | µm | 19 | 20 |
| Average secondary particle diameter (D50) | µm | 9,7 | 9,9 |
| Average secondary particle diameter (D2.5) | µm | 3,9 | 4,2 |
| Half width of diffraction peak of (101) plane of D99 (La) | ° | 1,087 | 1,014 |
| Half width of diffraction peak of (101) plane of D50 | ° | 1,066 | 1,047 |
| Half width of diffraction peak of (101) plane of D2.5 (Lc) | ° | 1,061 | 1,084 |
| Half width of diffraction peak of (101) plane of particulate positive electrode active material (Li) | ° | 1,076 | 1,046 |
| Relative error of (101) plane | | 0,024 | -0,067 |
| Half width of diffraction peak of (001) plane of D99 (La) | ° | 0,759 | 0,712 |
| Half width of diffraction peak of (001) plane of D50 | ° | 0,745 | 0,743 |
| Half width of diffraction peak of (001) plane of D2.5 (Lc) | ° | 0,728 | 0,789 |
| Half width of diffraction peak of (001) plane of particulate positive electrode active material (Li) | ° | 0,762 | 0,762 |
| Relative error of (001) plane | | 0,041 | -0,101 |
| Tap density | g/mL | 2,27 | 2,19 |
| Bulk density | g/mL | 1,87 | 1,71 |
| Bulk density/tap density | | 0,82 | 0,78 |
| BET specific surface area | m2/g | 13,7 | 8,3 |

Evaluation items in Table 1 of the particulate positive electrode active material as a sample are as follows.

### (1) Average secondary particle diameter (D99, D50, D2.5)

The average secondary particle diameter was measured with a particle size distribution measuring device (LA-950 manufactured by Horiba, Ltd.) (the principle was based on a laser diffraction-scattering method).

### (2) Half Widths of Diffraction Peaks of (101) Plane and (001) Plane

X diffraction measurement was performed under the following conditions using an X-ray diffraction device (RINT2200 manufactured by Rigaku Corporation).
X-rays: CuKα/40 kV/40 mA
Slit: DS/SS=1°, RS = 0.3 mm
Scanning Mode: FT measurement
Sampling Time: 0.4 seconds
Step Width: 0.01°

### (3) Tap Density

The tap density was measured with a constant-volume measuring method in techniques described in JIS R1628 by using a tap denser (KYT-4000 manufactured by Seishin Enterprise Co., Ltd.).

### (4) Bulk Density

A sample was caused to free-fall to fill a container with the sample, and the bulk density was measured from the volume of the container and the mass of the sample.

### (5) BET Specific Surface Area

The BET specific surface area was measured according to a one-point BET method by using a specific surface area measuring device (Macsorb manufactured by Mountech Co., Ltd.).

The particle roundness of the particulate positive electrode active material as a sample is shown in Table 2. By using a wet flow type particle size-shape analyzer "FPIA-3000S" (manufactured by Sysmex Corporation) and an object lens standard (10 times), particles were measured under HRP measurement mode conditions, and the particle roundness was then analyzed according to the volumetric basis.

### (6) Classifier

A classifier (Elbow-Jet Classifier EJ-L-3 manufactured by Nittetsu Mining Co., Ltd.) was used. A classifying edge distance M and a classifying edge distance F were respectively set at 43.7 mm and 30.0 mm, and measurement particles were fed with feeding air, and classified.

**[Table 2]**

| Particle roundness | Example 1 | Comparative Example 1 |
|---|---|---|
| - | % by volume | % by volume |
| 1,00 | 17,26 | 8,97 |
| 0.99 or more and less than 1.00 | 23,35 | 10,77 |
| 0.98 or more and less than 0.99 | 19,77 | 17,33 |
| 0.97 or more and less than 0.98 | 13,82 | 17,81 |
| 0.96 or more and less than 0.97 | 8,22 | 13,39 |
| 0.95 or more and less than 0.96 | 5,37 | 10,02 |
| 0.85 or more and less than 0.95 | 11,07 | 19,73 |
| Less than 0.85 | 1,14 | 1,98 |

Samples classified into particle groups having average secondary particle diameters corresponding to D99, D50, and D2.5 with the classifier were subjected to X-ray diffraction analysis in order to measure the half widths of a (101) plane and a (001) plane. As shown in the above Table 1, in Example 1, the relative error of the (101) plane obtained by X-ray diffraction analysis was 0.024, and could be reduced to a value of 0 or more, 0.025 or less. The relative error of the (001) plane obtained by X-ray diffraction analysis was 0.041, and could be reduced to 0 or more and 0.045 or less. The positive electrode active material particles having the ranges of D2.5 and D99, that is, the particulate positive electrode active material could have a wholly uniform crystallinity. Each of the relative error of the (101) plane and the relative error of the (001) plane was greater than 0, and the half width of the positive electrode active material particles having D99 was greater than the half width of the positive electrode active material particles having D2.5, whereby the crystallinity of the positive electrode active material having a large particle diameter was lower than the crystallinity of the positive electrode active material having a small particle diameter. Therefore, it was found that the particulate positive electrode active material can have a wholly uniform crystallinity, and the utilization rate and cyclability of the rechargeable battery can be improved in Example 1 in which the crystallinity of the large particle diameter is lower than the crystallinity of the small particle diameter.

It was found that, in Example 1, the excellent tap density and bulk density are obtained, whereby a high filling density can be obtained, and the capacity with respect to volume of the rechargeable battery can be increased. As shown in the above Table 2, it was found that the proportion of the positive electrode active material having a particle roundness of less than 0.85 in Example 1 is reduced to 1.14% by volume, whereby a high filling density can be obtained.

On the other hand, in Comparative Example 1, the relative error of the (101) plane obtained by X-ray diffraction analysis and the relative error of the (001) plane obtained by X-ray diffraction analysis were less than 0, and respectively -0.067 and -0.101. The crystallinity of the positive electrode active material having a large particle diameter was higher than the crystallinity of the positive electrode active material having a small particle diameter. The absolute value of the relative error of the (101) plane was greater than 0.025, and the absolute value of the relative error of the (001) plane was greater than 0.045. The particulate positive electrode active material could not have a wholly uniform crystallinity. Therefore, it was found that, in Comparative Example 1 in which the particulate positive electrode active material cannot have a wholly uniform crystallinity, and the crystallinity of the large particle diameter is higher than the crystallinity of the small particle diameter, the utilization rate and cyclability of the rechargeable battery are not sufficiently improved.

It was found that the tap density and the bulk density in Comparative Example 1 are lower than those in Example 1, whereby a high filling density cannot be obtained as compared with Example 1, which cannot provide a high capacity with respect to volume of the rechargeable battery. As shown in the above Table 2, it was found that the proportion of the positive electrode active material particles having a particle roundness of less than 0.85 in Comparative Example 1 is 1.98% by volume, whereby a high filling density cannot be obtained as compared with Example 1.

### Industrial Applicability

A particulate positive electrode active material of the present invention has a uniform crystallinity regardless of the size of a secondary particle diameter, and can be filled in a high density state, whereby the particulate positive electrode active material has a high utility value, for example, in the field of a rechargeable battery requiring an excellent utilization rate and cyclability, and a high capacity with respect to volume.

### List of Reference Signs

1 manufacturing device
10 pH adjusting tank
11 pH adjuster feeding means
12 circulating path
13 raw material liquid feeding means

## Claims

1. A particulate positive electrode active material comprising positive electrode active material particles formed by aggregation of a plurality of primary particles, wherein
a ratio of a value obtained by deducting a half width of a diffraction peak of a (101) plane obtained by X-ray diffraction analysis of positive electrode active material particles having a secondary particle diameter at a cumulative volume percentage of 2.5% by volume (D2.5), from a half width of a diffraction peak of a (101) plane obtained by X-ray diffraction analysis of positive electrode active material particles having a secondary particle diameter at a cumulative volume percentage of 99% by volume (D99), in the particulate positive electrode active material, to a half width of a diffraction peak of a (101) plane obtained by X-ray diffraction analysis of the particulate positive electrode active material is 0 or more and 0.025 or less, and
a ratio of a value obtained by deducting a half width of a diffraction peak of a (001) plane obtained by X-ray diffraction analysis of positive electrode active material particles having a secondary particle diameter at a cumulative volume percentage of 2.5% by volume (D2.5), from a half width of a diffraction peak of a (001) plane obtained by X-ray diffraction analysis of positive electrode active material particles having a secondary particle diameter at a cumulative volume percentage of 99% by volume (D99), in the particulate positive electrode active material, to a half width of a diffraction peak of a (001) plane obtained by X-ray diffraction analysis of the particulate positive electrode active material is 0 or more and 0.045 or less.

2. The particulate positive electrode active material according to claim 1, wherein the secondary particle diameter at a cumulative volume percentage of 99% by volume (D99) is 15 µm to 25 µm, the secondary particle diameter at a cumulative volume percentage of 2.5% by volume (D2.5) is 1.0 µm to 5.0 µm, and a secondary particle diameter at a cumulative volume percentage of 50% by volume (D50) is 8.0 µm to 13.5 µm.

3. The particulate positive electrode active material according to claim 1 or 2, wherein the half width of a diffraction peak of a (101) plane obtained by X-ray diffraction analysis is 1.050° or more, and the half width of a diffraction peak of a (001) plane obtained by X-ray diffraction analysis is 0.750° or more.

4. The particulate positive electrode active material according to any one of claims 1 to 3, wherein a proportion of the positive electrode active material particles having a particle roundness of less than 0.85 is 1.20% by volume or less.

5. The particulate positive electrode active material according to any one of claims 1 to 4, wherein the particulate positive electrode active material has a bulk density of 1.75 g/ml or more.

6. The particulate positive electrode active material according to claim 5, wherein a ratio of the bulk density to a tapping density is 0.78 to 0.90.

7. The particulate positive electrode active material according to any one of claims 1 to 6, wherein the particulate positive electrode active material has a BET specific surface area of 10.0 to 17.0 m²/g.

8. A positive electrode plate comprising the particulate positive electrode active material according to any one of claims 1 to 7.

9. A rechargeable battery comprising the positive electrode plate according to claim 8.
